# FASCICULE DE BREVET EUROPEEN

(11) **EP 3 925 837 B1**
(45) Date de publication et mention de la délivrance du brevet: **09.04.2025**
(21) Numéro de dépôt: 21180344.0
(22) Date de dépôt: 18.06.2021
(51) Int. Cl.: B60S 1/02, B60S 1/54, H05B 3/84

(54) **ENSEMBLE DE PARE-BRISE POUR VÉHICULE DÉPOURVU D'ESSUIE-GLACE ET VÉHICULE ASSOCIÉ**
WINDSCHUTZSCHEIBENANORDNUNG FÜR FAHRZEUG OHNE SCHEIBENWISCHER UND ENTSPRECHENDES FAHRZEUG
WINDSCREEN ASSEMBLY FOR A VEHICLE WITHOUT WINDSCREEN WIPER AND ASSOCIATED VEHICLE

(30) Priorité: 19.06.2020 FR 2006456
(43) Date de publication de la demande: 22.12.2021
(73) Titulaire: ALSTOM Holdings, 93400 Saint-Ouen-sur-Seine (FR)
(72) Inventeur: VIDAL, Guillaume, 17230 VILLEDOUX (FR); LUGOL, Jean-Louis, 17540 VERINES (FR); FALGUIERES, Nicolas, 17220 BOURGNEUF (FR); STEGRE, Annie, 17290 THAIRE (FR)
(74) Mandataire: Lavoix

(56) Documents cités:
- BE-A- 523 394
- CH-A- 337 737
- DE-A1- 10 012 004
- DE-A1- 102015 210 469
- FR-A- 1 003 943
- GB-A- 2 341 787
- JP-A- 2017 212 148
- US-A1- 2013 075 383
- US-B1- 6 273 488

## Description

La présente invention concerne un ensemble de pare-brise pour véhicule.

Pour permettre une bonne visibilité à travers le pare-brise, y compris en cas d'averse, il est usuellement prévu un ou plusieurs bras et balais d'essuie-glace.

Cependant, la présence d'essuie-glace présente divers désavantages.

Cela offre notamment des possibilités de prise, de sorte qu'une personne est susceptible de s'y accrocher, et ainsi se faire porter par le véhicule correspondant. Une telle pratique est particulièrement dangereuse.

Par ailleurs, les bras d'essuie-glace forment une surface agressive et dangereuse sensiblement à la hauteur de la tête en cas de choc avec un piéton.

En outre, les bras et balais d'essuie-glace réduisent, d'une part, la zone de visibilité du conducteur et, d'autre part, couvrent une zone d'essuyage limitée par rapport à la surface du pare-brise.

Alternativement, le document FR 1 003 943 A décrit une canalisation placée à la partie supérieure d'un pare-brise et à l'extérieur de celui-ci. La canalisation reçoit de l'air comprimé et comporte des orifices ou des fentes de manière à projeter cet air comprimé le long du pare-brise.

Un objet de l'invention est donc de proposer un ensemble pour véhicule comprenant un pare-brise dépourvu d'essuie-glace et permettant une bonne visibilité y compris en cas d'averse.

A cet effet, l'invention a pour objet un ensemble de pare-brise selon la revendication 1.

Le premier système d'injection d'air assure notamment l'évacuation d'eau éventuellement présente sur le pare-brise. Le réseau chauffant prévient la formation de glace ou de neige sur le pare-brise et, le cas échéant, permet sa transformation en eau liquide dont l'évacuation est réalisée par le premier système d'injection d'air.

L'ensemble peut en outre présenter une ou plusieurs des caractéristiques selon les revendications 2 à 7, considérées individuellement ou selon toutes les combinaisons techniquement possibles.

L'invention concerne en outre un véhicule, notamment un tramway, comprenant un ensemble tel que décrit précédemment.

D'autres caractéristiques et avantages de l'invention apparaîtront à la lecture de la description qui suit de modes de réalisation de l'invention, donnée à titre d'exemple uniquement et en référence aux dessins dans lesquels :
[Fig 1] la figure 1 est une vue schématique en coupe de côté d'un véhicule comprenant un ensemble de pare-brise selon un mode de réalisation de l'invention, et
[Fig 2] la figure 2 est une vue schématique en perspective de trois-quarts face de l'ensemble de la figure 1.

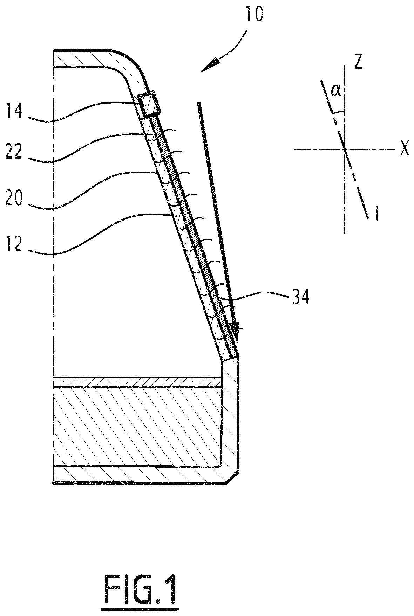

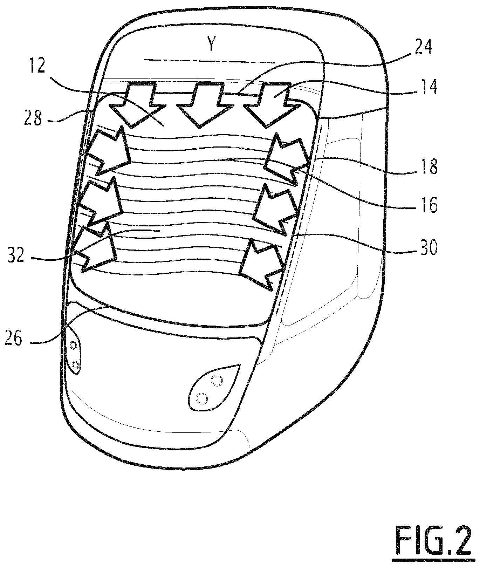

Un ensemble 10 de pare-brise pour véhicule selon un mode de réalisation de l'invention est représenté sur les figures 1 et 2.

La direction verticale Z est définie pour la suite comme la perpendiculaire du plan de roulement du véhicule correspondant. Les directions transversale Y et longitudinale X sont définies perpendiculairement à la direction verticale Z selon le sens usuel pour un véhicule.

On entend par « inférieur » et « supérieur » les sens usuels par rapport à la direction verticale Z telle que définie ci-dessus.

Un tel ensemble est dépourvu d'essuie-glace.

L'ensemble 10 est, par exemple, symétrique par rapport à un plan médian parallèle aux directions longitudinale X et verticale Z.

L'ensemble 10 comprend un pare-brise 12, un premier système d'injection d'air 14 et un réseau chauffant 16.

L'ensemble 10 comprend en outre ici un deuxième système d'injection d'air 18.

Le pare-brise 12 est prévu pour s'étendre à l'avant d'un véhicule ou à une extrémité du véhicule dans le cas d'un véhicule à double sens de circulation.

Le véhicule est par exemple un tramway.

Alternativement, le véhicule est un autobus ou un train, tel qu'un train à vitesse réduite, par exemple du réseau Transport express régional (TER).

Le pare-brise 12 présente une surface intérieure 20 destinée à s'étendre vers l'intérieur du véhicule et une surface extérieure 22 destinée à s'étendre vers l'extérieur du véhicule.

Le pare-brise 12 présente un bord supérieur 24 et un bord inférieur 26.

Le pare-brise 12 présente en outre deux bords latéraux 28, 30.

Chaque bord latéral 28, 30 relie le bord supérieur 24 et le bord inférieur 26.

Les bords latéraux 28, 30 sont opposés selon la direction transversale Y.

Le pare-brise 12 forme un angle d'inclinaison α avec la direction verticale Z, l'angle d'inclinaison étant inférieur à 40°.

On définit la direction d'inclinaison I comme une direction comprise dans un plan perpendiculaire à la direction transversale Y et présentant avec la direction verticale Z un angle égal à l'angle d'inclinaison α.

Le bord inférieur 26 et le bord supérieur 24 sont opposés selon la direction d'inclinaison I.

Le pare-brise 12 est incliné tel que la surface extérieure 22 est orientée vers le haut.

Dans le mode de réalisation représenté, le pare-brise 12 présente un plan d'extension principale. Le plan d'extension principale est ici parallèle à la direction transversale Y. L'angle d'inclinaison α est égal à l'angle aigu formé entre la direction verticale Z et le plan d'extension principale.

Le plan d'extension principale entre ici en intersection avec le bord inférieur 26 et le bord supérieur 24. Plus particulièrement, le plan d'extension principale comprend le bord inférieur 26 et le bord supérieur 24 dans le cas de bords inférieur 26 et supérieur 24 droit.

Le pare-brise 12 présente une zone de visibilité 32.

La zone de visibilité 32 correspond, par exemple, à une zone du pare-brise 12 à travers laquelle un conducteur du véhicule est amené à regarder.

La zone de visibilité 32 du pare-brise 12 est, par exemple, définie suivant les critère du GUIDE STRMTG : SECURITE DES POSTES DE CONDUITE DES TRAMWAYS dans le cas d'un ensemble de pare-brise de tramway.

La surface extérieure 22 est pourvue d'un revêtement hydrophobe 34. Plus particulièrement, l'ensemble de la surface extérieure 22 est revêtu du revêtement hydrophobe 34 dans la zone de visibilité 32.

Le revêtement hydrophobe 34 est, par exemple, un revêtement AQUACONTROL ^{®} commercialisé par Sekurit pour Saint-Gobain.

Le revêtement hydrophobe 34 facilite le glissement de l'eau sur le pare-brise, au moins dans la zone de visibilité 32, et prévient des salissures.

Le premier système d'injection d'air 14 est apte à souffler de l'air.

Le premier système d'injection d'air 14 présente, par exemple, au moins un état activé dans lequel il souffle de l'air et un état désactivé dans lequel il ne souffle pas d'air.

Le premier système d'injection d'air 14 souffle, par exemple, en continu, plus particulièrement lorsqu'il est activé.

Dans un mode de réalisation, le premier système d'injection d'air 14 présente plusieurs états activés correspondant à des **vitesses** et/ou des orientations différentes de l'air soufflé.

Le premier système d'injection d'air 14 s'étend le long du bord supérieur 24 du pare-brise 12. Plus particulièrement, le premier système d'injection d'air 14 s'étend sur l'ensemble du bord supérieur 24 du pare-brise 12.

Le premier système d'injection d'air 14 est agencé pour souffler de l'air en direction du bord inférieur 26.

La direction de l'air soufflé par le premier système d'injection d'air 14 est incliné d'un angle inférieur à 10° par rapport à la surface extérieure 22 du pare-brise 12, par exemple par rapport au plan d'extension principale du pare-brise. Plus particulièrement, l'air soufflé présente une inclinaison comprise entre 0° et 10°, l'inclinaison étant telle que l'air soufflé par le premier système d'injection d'air se rapproche du pare-brise 12 pendant son éjection.

La direction de l'air soufflé par le premier système d'injection d'air 14 est en outre ici parallèle aux bords latéraux 28, 30 du pare-brise 12 à 5° près.

Le flux d'air soufflé par le premier système d'injection d'air 14 présente, par exemple, une vitesse comprise entre 100 km/h et 300 km/h.

Le flux d'air soufflé par le premier système d'injection d'air 14 permet l'évacuation d'eau du pare-brise 12.

Le deuxième système d'injection d'air 18 est apte à souffler de l'air.

Le deuxième système d'injection d'air 18 présente, par exemple, au moins un état activé dans lequel il souffle de l'air et un état désactivé dans lequel il ne souffle pas d'air.

Le deuxième système d'injection d'air 18 souffle, par exemple, en continu, plus particulièrement lorsqu'il est activé.

Dans un mode de réalisation, le deuxième système d'injection d'air 18 présente plusieurs états activés correspondant à des vitesses et/ou des orientations différentes de l'air soufflé.

Le deuxième système d'injection d'air 18 s'étend le long des deux bords latéraux 28, 30 du pare-brise 12. Plus particulièrement, le deuxième système d'injection d'air 18 s'étend sur au moins 50% de chacun des deux bords latéraux du pare-brise 12.

Le deuxième système d'injection d'air est agencé pour souffler de l'air en direction du bord inférieur 26.

La direction de l'air soufflé par le deuxième système d'injection d'air 18 forme un angle avec le bord inférieur 26 comprise entre 30° et 60°.

La direction de l'air soufflé par le deuxième système d'injection d'air 18 est incliné d'un angle inférieur à 10° par rapport à la surface extérieure 22 du pare-brise 12, par exemple par rapport au plan d'extension principale du pare-brise. Plus particulièrement, l'air soufflé présente une inclinaison comprise entre 0° et 10°, l'inclinaison étant telle que l'air soufflé par le deuxième système d'injection d'air 18 se rapproche du pare-brise 12 pendant son éjection.

En outre, la direction de l'air soufflé par le deuxième système d'injection d'air 18 est orientée vers un plan médian du pare-brise selon la direction transversale Y.

Dans le mode de réalisation représenté, l'air soufflé par le deuxième système d'injection d'air 18 depuis chaque bord latéral 28, 30 forme un angle donné respectif avec la direction transversale Y, l'angle donné étant constant pour chaque bord latéral 28, 30. L'air est orienté en direction du plan médian. L'angle donné respectif est, par exemple, compris entre 30° et 60°.

Dans un mode de réalisation alternatif, l'air soufflé par le deuxième système d'injection d'air 18 depuis chaque bord latéral 28, 30 est orienté selon la direction transversale Y et la direction d'inclinaison I vers le milieu du bord inférieur 26.

Le flux d'air soufflé par le deuxième système d'injection d'air 18 présente, par exemple, une vitesse comprise entre 100 km/h et 300 km/h.

Le flux d'air soufflé par le deuxième système d'injection d'air 18 aide à l'évacuation de l'eau du pare-brise 12 par le flux d'air soufflé par le premier système d'injection d'air 14.

Le réseau chauffant 16 est apte à chauffer ledit pare-brise 12.

Plus particulièrement, le réseau chauffant 16 est apte à chauffer l'ensemble de la zone de visibilité 32.

Le réseau chauffant 16 présente, par exemple, au moins un état activé dans lequel il chauffe le pare-brise et un état désactivé dans lequel il ne chauffe pas le pare-brise.

Le réseau chauffant 16 est, par exemple, apte à maintenir le pare-brise à une température de chauffage donnée, plus particulièrement lorsqu'il est activé. Ladite température de chauffage donnée est par exemple, comprise entre 20° et 6°C. Le réseau chauffant est notamment apte à porter le pare-brise à une température de 12°C au bout de 4 min.

Dans un mode de réalisation, le réseau chauffant 16 présente plusieurs états activés correspondant à des températures de chauffage différentes.

Le réseau chauffant 16 est intégré au pare-brise 12.

Le pare-brise 12 comprend, par exemple, au moins deux couches de verre, le réseau chauffant 16 comprenant un réseau de fils électriques agencés entre deux des couches de verre.

Le réseau chauffant 16 prévient la formation de glace ou de neige sur le pare-brise 12 et permet sa transformation en eau liquide dont l'évacuation est réalisée par le premier système d'injection d'air 14.

L'ensemble est en outre dépourvu de système d'injection d'air agencé le long du bord inférieur du pare-brise et apte à souffler de l'air.

Un tel ensemble est particulièrement avantageux dans le cas d'un véhicule présentant un pare-brise présentant une faible inclinaison avec la verticale et circulant à une vitesse inférieure à 100km/h, par exemple pour un tramway, bus, autocar, TER ou bateau.

Un ensemble de pare-brise selon l'invention permet donc d'évacuer l'ensemble des intempéries du type pluie, glace ou neige, grâce à la combinaison du réseau chauffant et du premier système d'injection d'air.

Dans un mode de réalisation avantageux, le deuxième système d'injection d'air aide à l'évacuation d'eau.

Dans un mode de réalisation avantageux, le revêtement hydrophobe facilite le glissement de l'eau sur le pare-brise et prévient certaines salissures éventuelles.

Ainsi, la visibilité à travers le pare-brise est garantie, y compris en cas d'intempéries.

L'absence d'essuie-glaces évite la présence de surface agressive en cas d'impact, la présence de prises pour des personnes souhaitant s'accrocher au véhicule, la présence de zones de visibilité morte dues à la présence ou au passage de l'essuie-glace dans la zone d'essuyage ou de zones à faible visibilité.

En outre, un tel ensemble est apte à fonctionner de manière continue et constante dans le temps, contrairement à un essuie-glace qui présente un cycle de balayage. Cela permet notamment d'éviter d'avoir une portion du pare-brise à travers laquelle il est difficile de regarder en cas de très fortes intempéries lorsque l'essuie-glace balaie une autre portion.

## Revendications

1. Ensemble (10) de pare-brise pour véhicule, l'ensemble comprenant un pare-brise (12), le pare-brise (12) comprenant un bord supérieur (24), deux bords latéraux (28, 30) et un bord inférieur (26), l'ensemble (10) comprenant un premier système d'injection d'air (14), le premier système d'injection d'air (14) s'étendant le long du bord supérieur (24) du pare-brise (12), le premier système d'injection d'air (14) étant agencé pour souffler de l'air en direction du bord inférieur (26), **caractérisé en ce que** l'ensemble comprend un réseau chauffant (16), le réseau chauffant (16) étant apte à chauffer ledit pare-brise (12), le réseau chauffant (16) étant intégré au pare-brise (12), et l'ensemble comprend un deuxième système d'injection d'air (18) s'étendant le long des deux bords latéraux (28, 30) du pare-brise, le deuxième système d'injection d'air (18) étant agencé pour souffler de l'air en direction du bord inférieur (26), la direction de l'air soufflé par le deuxième système d'injection d'air (18) formant un angle avec le bord inférieur (26) compris entre 30° et 60°.

2. Ensemble selon la revendication 1, dans lequel le premier système d'injection d'air (14) s'étend sur l'ensemble du bord supérieur (24) du pare-brise (12).

3. Ensemble selon la revendication 1 ou 2, dans lequel le pare-brise (12) présente une zone de visibilité (32), le réseau chauffant (16) étant apte à chauffer l'ensemble de la zone de visibilité (32).

4. Ensemble selon l'une quelconque des revendications 1 à 3, dans lequel le pare-brise (12) présente une surface extérieure (22), la surface extérieure (22) étant pourvue d'un revêtement hydrophobe (34).

5. Ensemble selon la revendication 4, dans lequel le pare-brise (12) présente une zone de visibilité (32), l'ensemble de la surface extérieure (22) étant revêtu par le revêtement hydrophobe (34) dans la zone de visibilité (32).

6. Ensemble selon l'une quelconque des revendications 1 à 5, dans lequel le pare-brise (12) forme un angle (α) inférieur à 40° avec une direction verticale (Z).

7. Ensemble selon l'une quelconque des revendications 1 à 6, dépourvu d'essuie-glaces et/ou de système d'injection d'air apte à souffler de l'air et agencé le long du bord inférieur (26) du pare-brise (12).

8. Véhicule, notamment tramway, comprenant un ensemble (10) selon l'une quelconque des revendications 1 à 7.

## Patentansprüche

1. Windschutzscheibenanordnung (10) für ein Fahrzeug, die Anordnung umfassend eine Windschutzscheibe (12), die Windschutzscheibe (12) umfassend einen oberen Rand (24), zwei seitliche Ränder (28, 30) und einen unteren Rand
(26), die Anordnung (10) umfassend ein erstes Lufteinblassystem (14), wobei sich das erste Lufteinblassystem (14) entlang des oberen Rands (24) der Windschutzscheibe (12) erstreckt, wobei das erste Lufteinblassystem (14) angeordnet ist, um Luft in Richtung des unteren Rands (26) zu blasen, **dadurch gekennzeichnet, dass** die Anordnung ein Heizungsnetz (16) umfasst, wobei das Heizungsnetz (16) geeignet ist, um die Windschutzscheibe (12) zu erwärmen, wobei das Heizungsnetz (16) in die Windschutzscheibe (12) integriert ist, und die Anordnung
ein zweites Lufteinblassystem (18) umfasst, das sich entlang der zwei seitlichen Ränder (28, 30) der Windschutzscheibe erstreckt, wobei das zweite Lufteinblassystem (18) angeordnet ist, um Luft in Richtung des unteren Rands (26) zu blasen, wobei die Richtung der von dem zweiten Lufteinblassystem (18) geblasenen Luft einen Winkel mit dem unteren Rand (26) bildet, der zwischen 30° und 60° liegt.

2. Anordnung nach Anspruch 1, wobei sich das erste Lufteinblassystem (14) über die Gesamtheit des oberen Rands (24) der Windschutzscheibe (12) erstreckt.

3. Anordnung nach Anspruch 1 oder 2, wobei die Windschutzscheibe (12) einen Sichtbereich (32) aufweist, wobei das Heiznetzwerk (16) geeignet ist, um den gesamten Sichtbereich (32) zu erwärmen.

4. Anordnung nach einem der Ansprüche 1 bis 3, wobei die Windschutzscheibe (12) eine Außenfläche (22) aufweist, wobei die Außenfläche (22) mit einer wasserabweisenden Beschichtung (34) versehen ist.

5. Anordnung nach Anspruch 4, wobei die Windschutzscheibe (12) einen Sichtbereich (32) aufweist, wobei die Gesamtheit der Außenfläche (22) in dem Sichtbereich (32) mit der wasserabweisenden Beschichtung (34) beschichtet ist.

6. Anordnung nach einem der Ansprüche 1 bis 5, wobei die Windschutzscheibe (12) einen Winkel (α) von weniger als 40° mit einer vertikalen Richtung (Z) bildet.

7. Anordnung nach einem der Ansprüche 1 bis 6, die keine Scheibenwischer und/oder kein Lufteinblassystem aufweist, das geeignet ist, um Luft zu blasen, und entlang des unteren Rands (26) der Windschutzscheibe (12) angeordnet ist.

8. Fahrzeug, insbesondere Straßenbahn, umfassend eine Anordnung (10) nach einem der Ansprüche 1 bis 7.

## Claims

1. A windscreen assembly (10) for a vehicle, the assembly comprising a windscreen (12), the windscreen (12) comprising an upper edge (24), two side edges (28, 30) and a lower edge
(26), the assembly (10) comprising a first air injection system (14), the first air injection system (14) extending along the upper edge (24) of the windscreen (12), the first air injection system (14) being arranged to blow air towards the lower edge (26), **characterised in that** the assembly comprises a heating network (16), the heating network (16) being adapted to heat said windscreen (12), and the assembly comprises
a second air injection system (18) extending along the two side edges (28, 30) of the windscreen, the second air injection system (18) being arranged to blow air towards the lower edge (26), the direction of the air blown by the second air injection system (18) forming an angle with the lower edge (26) of between 30° and 60°.

2. The assembly according to claim 1, wherein the first air injection system (14) extends over the entire upper edge (24) of the windscreen (12).

3. The assembly according to claim 1 or 2, wherein the windscreen (12) has an area of visibility (32), the heating network (16) being capable of heating the entire area of visibility (32).

4. The assembly according to any one of claims 1 to 3, wherein the windscreen (12) has an outer surface (22), the outer surface (22) being provided with a hydrophobic coating (34).

5. The assembly according to claim 4, wherein the windscreen (12) has an area of visibility (32), the whole of the outer surface (22) being coated by the hydrophobic coating (34) in the area of visibility (32).

6. The assembly according to any one of claims 1 to 5, wherein the windscreen (12) forms an angle (α) of less than 40° with a vertical direction (Z).

7. The assembly according to any one of claims 1 to 6, without windscreen wipers and/or air injection system capable of blowing air and arranged along the lower edge (26) of the windscreen (12).

8. A vehicle (10), particularly a tram, comprising an assembly (10) according to any of claims 1 to 7.
